(19) **Europäisches Patentamt**
**European Patent Office**
**Office européen des brevets**

(11) **EP 2 322 492 A1**

(12) **EUROPEAN PATENT APPLICATION**
published in accordance with Art. 153(4) EPC

(43) Date of publication:
**18.05.2011 Bulletin 2011/20**

(51) Int Cl.:
**C04B 35/46** (2006.01)

(21) Application number: **09811507.4**

(22) Date of filing: **02.09.2009**

(86) International application number:
**PCT/JP2009/065321**

(87) International publication number:
**WO 2010/026982 (11.03.2010 Gazette 2010/10)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **04.09.2008 JP 2008226618**
**13.11.2008 JP 2008291354**

(71) Applicant: **Sumitomo Chemical Company, Limited Tokyo 104-8260 (JP)**

(72) Inventors:
• **MAKI, Hajime**
**Tsukuba-shi**
**Ibaraki 305-0051 (JP)**
• **SUZUKI, Keiichiro**
**Niihama-shi**
**Ehime 792-0871 (JP)**
• **IWASAKI, Kentaro**
**Niihama-shi**
**Ehime 792-0025 (JP)**

(74) Representative: **Vossius & Partner**
**Siebertstrasse 4**
**81675 München (DE)**

(54) **ALUMINUM TITANATE CERAMIC MANUFACTURING METHOD**

(57) The invention provides a process for producing a shaped body of aluminum titanate-based ceramic such as aluminum titanate or aluminum magnesium titanate having smaller shrinkage ratio relative to a shaped body of a starting material mixture, and having a smaller coefficient of thermal expansion. The invention is a process for producing an aluminum titanate-based ceramic, comprising firing a starting material mixture containing a titanium source material and an aluminum source material, wherein the BET specific surface area of the aluminum source material is 0.1 $m^2$/g or more and 5 $m^2$/g or less.

**EP 2 322 492 A1**

**Description**

TECHNICAL FIELD

The present invention relates to a process for producing aluminum titanate-based ceramics.

BACKGROUND ART

Aluminum titanate-based ceramics are ceramics containing titanium and aluminum as the constitutive elements and showing a crystal pattern of aluminum titanate in X-ray diffraction spectrum, and are known as ceramics excellent in thermal resistance. Such aluminum titanate-based ceramics are conventionally used for firing tools such as crucibles. Recently, the value of industrial applicability of the ceramics is increasing as a material of constituting a ceramic filter for collecting fine carbon particles contained in exhaust gas discharged from diesel engines.

As a process for producing such aluminum titanate-based ceramics, known is a process of firing a powdery starting material mixture obtained by mixing a powder of a titanium source compound such as titania and a powder of an aluminum source compound such as alumina (Patent Reference 1).

PRIOR ART REFERENCE

PATENT REFERENCE

Patent Reference 1: WO2005/105704

DISCLOSURE OF THE INVENTION

PROBLEMS THAT THE INVENTION IS TO SOLVE

However, when a shaped body of a ceramic is produced by firing a shaped body of a starting material mixture in the conventional process, the shrinkage ratio of the shaped body of the ceramic relative to the shaped body of the starting material mixture may increase, and the obtained ceramic may have a larger coefficient of thermal expansion.

MEANS FOR SOLVING THE PROBLEMS

The invention provides a process for producing an aluminum titanate-based ceramic, comprising firing a starting material mixture containing a titanium source material and an aluminum source material, wherein the BET specific surface area of the aluminum source material is 0.1 $m^2$/g or more and 5 $m^2$/g or less.

In the process of the invention, the BET specific surface area of the aluminum source material is preferably 0.3 $m^2$/g or more and 3 $m^2$/g or less.

In the process of the invention, preferably, the starting material is shaped to give a shaped body of the starting material, and the resulting shaped body of the starting material is fired.

In the process of the invention, the titania-equivalent amount of the titanium source material to be used is preferably 30 parts by mass or more and 70 parts by mass or less relative to 100 parts by mass of the total of the titania-equivalent amount of the titanium source material to be used and the alumina-equivalent amount of the aluminum source material to be used. The BET specific surface area of the titanium source material is preferably 0.1 $m^2$/g or more and 100 $m^2$/g or less.

The starting material mixture preferably further contains a magnesium source material. The magnesia-equivalent amount of the magnesium source material to be used is 0.1 parts by mass or more and 10 parts by mass or less relative to 100 parts by mass of the total of the titania-equivalent amount of the titanium source material to be used and the alumina-equivalent amount of the aluminum source material to be used.

The starting material mixture preferably further contains a silicon source material. The silicon source material is preferably a feldspar or a glass frit, and the deformation point of the glass frit is preferably 700°C or more.

In the process of the invention, the starting material mixture is preferably further mixed with a vibration mill. In the vibration mill mixing, alumina balls or zirconia balls having a diameter of 1 mm or more and 100 mm or less are preferably used as a grinding media. The vibration mill is preferably vibrated with the amplitude of 2 mm or more and 20 mm or less.

EFFECT OF THE INVENTION

In the process of the invention, when a shaped body of an aluminum titanate-based ceramic is produced by firing a shaped body of a starting material mixture, a shrinkage ratio of the shaped body of the aluminum titanate-based ceramic relative to the shaped body of the starting material mixture may be smaller, and the obtained aluminum titanate-based ceramic may have a smaller coefficient of thermal expansion.

MODE FOR CARRYING OUT THE INVENTION

In the process of the invention, used is a starting material mixture containing one or more types of a titanium source material and one or more types of an aluminum source material. The starting material mixture preferably further contains one or more types of a magnesium source material and/or one or more types of a silicon source material.
In the invention, the titanium source material means a material containing a titanium element, for example, includes titanium oxide. Titanium oxide includes, for example, titanium (IV) oxide, titanium(III) oxide, and titanium(II) oxide, and preferred is titanium(IV) oxide. Titanium(IV) oxide may be crystalline or amorphous. When titanium(IV) oxide is crystalline, the crystal type thereof includes an anatase type, a rutile type, and a brookite type, and preferred are an anatase type and a rutile type.
As the titanium source material, also usable is a material capable of being led to titania (titanium oxide) by firing in air. The material includes, for example, titanium salt, titanium alkoxide, titanium hydroxide, titanium nitride, titanium sulfide, and titanium.
The titanium salt particularly includes titanium trichloride, titanium tetrachloride, titanium(IV) sulfide, titanium (VI) sulfide, andtitanium(IV) sulfate. The titanium alkoxide particularly includes titanium(IV) ethoxide, titanium(IV) methoxide, titanium(IV) tert-butoxide, titanium(IV) isobutoxide, titanium(IV) n-propoxide, titanium(IV) tetraisopropoxide, and their chelate compounds.
The titanium source material includes a composite oxide containing titanium and some other metal element. The composite oxide containing titanium and some other metal element includes aluminum titanate, and aluminum magnesium titanate.
The BET specific surface area of the titanium source material used in the invention is generally $0.1 \ m^2/g$ or more and $100 \ m^2/g$ or less, preferably $0.2 \ m^2/g$ or more and $50 \ m^2/g$ or less. The surface of the titanium source material may be coated with a thin surface layer of an inorganic acid such as alumina, silica, zirconia, and aluminum hydroxide.
The titanium source compound may contain inevitable impurities derived from raw materials or those mixed in production steps.
In the invention, the aluminum source material means a material in which the metal element contained is consisting essentially of aluminum. However, the material may contain inevitable impurities derived from starting materials or those mixed in production steps. The aluminum source material includes, for example, alumina (aluminum oxide). The alumina may be crystalline or amorphous. When the alumina is crystalline, the crystal type thereof includes a y type, a $\delta$ type, a $\theta$ type, and a $\alpha$-type. The aluminum source material is preferably an $\alpha$-type alumina.
As the aluminum source material, a material capable of being led to alumina by firing in air is also usable, and includes, for example, aluminum salt, aluminum alkoxide, aluminum hydroxide, and aluminum metal.
The aluminum salt may be a salt with an inorganic acid (inorganic salt), or a salt with an organic acid (organic salt) . The aluminum inorganic salt particularly includes, for example, nitrates such as aluminum nitrate, ammonium aluminum nitrate; and carbonates such as ammonium aluminum carbonate. The aluminum organic salt includes, for example, aluminum oxalate, aluminum acetate, aluminum stearate, aluminum lactate, and aluminum laurate.
The aluminum alkoxide particularly includes, for example, aluminum isopropoxide, aluminum ethoxide, aluminum sec-butoxide, and aluminum tert-butoxide.
Aluminum hydroxide may be crystalline or amorphous. When aluminum hydroxide is crystalline, the crystal type thereof includes, for example, a gibbsite type, a bayerite type, a norstrandite type, a boehmite type, and a pseudo-boehmite type. Amorphous aluminum hydroxide includes, for example, an aluminum hydrolyzate to be obtained by hydrolysis of an aqueous solution of a water-soluble aluminum compound such as aluminum salt, and aluminum alkoxide.
The aluminum source material is preferably alumina, and aluminum hydroxide.
The BET specific surface area of the aluminum source material used in the invention is $0.1 \ m^2/g$ or more and $5 \ m^2/g$ or less, preferably $0.3 \ m^2/g$ or more and $3 \ m^2/g$ or less, more preferably $0.4 \ m^2/g$ or more and $2 \ m^2/g$ or less. When the BET specific surface area of the aluminum source material is smaller, then the reaction with a titanium source material in the reaction of conversion to aluminum titanate may be insufficient, and the reactivity tends to be lower. On the other hand, when the BET specific surface area of the aluminum source material is too large, then the porosity between particles may be larger and, as a result, the starting material mixture may be bulky, and firing may be getting on with annihilating the voids in the conversion to aluminum titanate, thereby increasing the shrinkage ratio. When the shrinkage ratio is larger, then the shaped body of the aluminum titanate-based ceramic after firing may be broken or cracked and the dimensional accuracy thereof may be poor. In the invention, the shrinkage ratio means the dimensional change between the shaped body of the starting material before firing and the shaped body of the aluminum titanate-based ceramic after firing, and may be calculated according to the method described in detail in the following Examples.

When the aluminum source material is prepared by crystallization (for example, aluminum hydroxide), the specific surface area of the aluminum source material may be adjusted by controlling the crystallization conditions (the type of the solvent and the solute in preparing an aqueous solution of aluminum in a supersaturated condition (hereinafter referred to as a supersaturated aqueous solution), the concentration of aluminum in the supersaturated aqueous solution, the concentration of a seed in the supersaturated aqueous solution with a seed, the reaction temperature and the reaction time in crystallization of the aluminum source material, and the like). For example, in general, aluminum hydroxide as an aluminum source material may be synthesized according to a Bayer process, and in particular, aluminum hydroxide having a smaller specific surface area may be obtained by adding a seed of aluminum hydroxide having a median secondary particle size of 1 $\mu$m or more and 70 $\mu$m or less to a supersaturated aqueous solution of aluminum. In the supersaturated aqueous solution, the alumina-equivalent aluminum concentration is preferably 50 g/L or less. In order that the aluminum concentration in the supersaturated aqueous solution could be 50 g/L or less, preferably, the temperature of the supersaturated aqueous solution is made higher, particularly 50°C or more and the boiling point or less. In the supersaturated aqueous solution with a seed added thereto, the seed concentration is preferably lower, particularly 10 g/L or more and 300 g/L or less. When the aluminum source material (for example, alumina) is obtained by firing, the specific surface area of the aluminum source material may be adjusted by controlling the BET specific surface area of the starting material before firing, and the firing temperature. In general, the specific surface area of the aluminum source material could be smaller when the firing temperature is higher. Further, the specific surface area of the aluminum source material may be adjusted by controlling the grinding condition in final particle size control, and the specific surface area of the aluminum source material may be smaller under a weak grinding condition.

The secondary particle size of the aluminum source material is preferably 10 $\mu$m or more and 100 $\mu$m or less, more preferably 20 $\mu$m or more and 70 $\mu$m or less from the viewpoint of the reactivity.

The amount to be used of the titanium source material and the aluminum source material may be determined by the calculated result in terms of titania [$TiO_2$] and alumina [$Al_2O_3$]. Relative to 100 parts by mass of the total of the titania-equivalent amount of the titanium source material to be used and the alumina-equivalent amount of the aluminum source material to be used (hereinafter referred to as total titania·alumina amount), the titania-equivalent amount of the titanium source material to be used is generally 30 parts by mass or more and 70 parts by mass or less, preferably 40 parts by mass or more and 60 parts by mass or less. The alumina-equivalent amount of the aluminum source material to be used is generally 30 parts by mass or more and 70 parts by mass or less, preferably 40 parts by mass or more and 60 parts by mass or less.

In the invention, the magnesium source material means a material containing a magnesium element. The magnesium source material includes, for example, magnesia (magnesium oxide). As the magnesium source material, also usable is a material capable of being led to magnesia by firing in air. Such material includes, for example, magnesium salt, magnesium alkoxide, magnesium hydroxide, magnesium nitride, and magnesium metal.

The magnesium salt particularly includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

The magnesium alkoxide particularly includes magnesium methoxide, and magnesium ethoxide.

As the magnesium source material, usable is a material containing magnesium and the other metal element. Such material includes, for example, magnesia spinel [$MgAl_2O4$] , and aluminum magnesium titanate.

The magnesium source material may contain inevitable impurities derived from raw materials or those mixed in production steps.

When the starting material mixture further contains a magnesium source material, the magnesia[MgO]-equivalent amount of the magnesium source material to be used is generally 0.1 parts by mass or more and 10 parts by mass or less, preferably 8 parts by mass or less, relative to 100 parts by mass of the total titania·alumina amount.

The silicon source material means a material containing a silicon element. The silicon source material includes, for example, silicon oxide (silica) such as silicon dioxide, and silicon monoxide. As the silicon source material, also usable is a material capable of being led to silica by firing in air. Such material includes, for example, silicic acid, silicon carbide, silicon nitride, silicon sulfide, silicon tetrachloride, silicon acetate, sodium silicate, sodium orthosilicate, feldspar, composite oxide containing silicon and aluminum, and glass frit. Feldspar and glass frit are preferable in terms of industrial availability. When glass frit is used for the silicon source material, glass frit having a deformation point of 700°C or more is preferable to be used in terms of improvement of thermal decomposition resistance of the aluminum titanate-based ceramic to be produced.

The silica-equivalent amount of the silicon source material to be used is preferably 0.1 parts by mass or more and 20 parts by mass or less, more preferably 1 part by mass or more and 10 parts by mass or less, relative to 100 parts by mass of the total titania·alumina amount.

In the process of the invention, a starting material mixture could be obtained by mixing the titanium source material and the aluminum source material. In the process of the invention, a starting material mixture is preferably obtained by mixing the titanium source material, the aluminum source material, and the magnesium source material and/or the silicon source material.

In the mixing, an ordinary mixing machine may be used. For example, usable are a stirring mixing machine such as a Nauter mixer, a Lodige mixer; an air mixing machine such as a flash blender; a ball mill, and a vibration mill. A mixing method may be a mixing in dry condition or a mixing in wet condition.

In the mixing in dry condition, for example, the starting material mixture such as the titanium source material and the aluminum source material may be stirred in a grinding container, not being dispersed in a liquid solvent, and in general, the mixture is stirred in the co-presence of a grinding media in a grinding container.

As the grinding container, generally used is container made of a metal material such as stainless steel, and its inner surface may be coated with a fluororesin, a silicone resin, an urethane resin and the like. The inner capacity of the grinding container may be generally from 1 time by volume to 4 times by volume, preferably from 1.2 times by volume to 3 times by volume as much as the total volume of the starting material mixture and the grinding media.

As the grinding media, for example, usable are alumina balls, zirconia balls and the like having a diameter of 1 mm or more and 100 mm or less, preferably 5 mm or more and 50 mm or less. The amount of the grinding media to be used may be generally 1 time by mass or more and 1000 times by mass or less, preferably 5 times by mass or more and 100 times by mass or less as much as the total amount of the starting material mixture to be used.

The grinding may be carried out, for example, by putting the starting material mixture and the grinding media into a grinding container and then vibrating and/or rotating the grinding container. By vibrating or rotating the grinding container, the starting material mixture may be stirred and mixed with the grinding media therein, and thus ground. For vibrating or rotating the grinding container for example, usable are ordinary grinding machines such as a vibration mill, a ball mill, a planetary mill, and a high-speed rotating grinder such as a pin mill. From the viewpoint of easiness of operation in industrial scale, preferred is a vibration mill. When the grinding container is vibrated, its vibration amplitude may be generally 2 mm or more and 20 mm or less, preferably 12 mm or less. The grinding may be carried out by continuous process or by batch process, and from the viewpoint of easiness of operation in industrial scale, continuous process is preferred. The time to be taken for grinding may be generally 1 minute or more and 6 hours or less, preferably 1.5 minutes or more and 2 hours or less.

In grinding the starting material mixture in dry condition, one or more types of additives such as a grinding aid, a deflocculant may be added thereto. The grinding aid includes, for example, alcohols such as methanol, ethanol, and propanol; glycols such as propylene glycol, polypropylene glycol, and ethylene glycol; amines such as triethanolamine; higher fatty acids such as palmitic acid, stearic acid, and oleic acid; carbon materials such as carbon black, and graphite.

When the additives are used, the total amount thereof to be used may be generally 0.1 parts by mass or more and 10 parts by mass or less, preferably 0.5 parts by mass or more and 5 parts by mass or less, more preferably 0.75 parts by mass or more and 2 parts by mass or less, relative to 100 parts by mass of the amount of the starting material mixture to be used.

On the other hand, in the mixing in wet condition, for example, the starting material mixture may be mixed and dispersed in a liquid solvent. The mixture may be carried out only by the stirring in an ordinary liquid solvent, or by the stirring in the co-presence of a grinding media in a grinding container.

As the grinding container, the same container as in the case of dry mixing may be used. The inner capacity of the grinding container may be generally 1 time by volume or more and 4 times by volume or less, preferably 1.2 times by volume or more and 3 times by volume or less as much as the total volume of the starting material mixture, the grinding media and the liquid medium.

The solvent in wet mixing includes water, ion-exchanged water, as well as organic solvents of primary alcohols such as methanol, ethanol, butanol and propanol, and secondary alcohols such as propylene glycol, polypropylene glycol and ethylene glycol. Above all, ion-exchanged water is preferred as containing few impurities. The amount of the solvent to be used is generally 20 parts by mass or more and 1000 parts by mass or less, preferably 30 parts by mass or more and 300 parts by mass or less relative to 100 parts by mass of the amount of the starting material mixture.

As the grinding media, generally used are the same grinding media as in the case of dry mixing, the amount of the grinding media to be used may be generally 1 time by mass or more and 1000 times by mass or less, preferably 5 times by mass or more and 100 times by mass or less as much as the total amount of the starting material mixture.

In grinding a starting material mixture in wet condition, a grinding aid may be added thereto, and the grinding may be carried out, for example, by putting the starting material mixture, the grinding media, the liquid solvent, and grinding media into a grinding container and then vibrating and/or rotating the grinding container. By vibrating or rotating the grinding container, the starting material mixture may be stirred and mixed with the grinding media therein, and thus ground. As the grinding container, the same container as in the case of dry grinding could be used. The grinding condition (vibration amplitude of the grinding container, grinding time, and the like) could be the same as in the case of dry grinding.

In the mixing in wet condition, a dispersant may be added to the solvent. The dispersant includes, for example, inorganic acids such as nitric acid, hydrochloric acid, and sulfuric acid; organic acids such as oxalic acid, citric acid, acetic acid, malic acid, and lactic acid; alcohols such as methanol, ethanol, and propanol; surfactants such as ammonium polycarboxylate. When the dispersant is used, the amount to be used may be generally 0.1 parts by mass or more and 20 parts by mass or less, preferably 0.2 parts by mass or more and 10 parts by mass or less, relative to 100 parts by mass of the solvent.

After the mixing, the uniformly mixed starting material mixture can be obtained by removing (for example, evaporating) the solvent.

In removing the solvent, the temperature and pressure conditions are not defined. The starting material mixture may be dried in air at room temperature, may be dried in vacuum, or may be dried under heat. The drying condition is not also defined, and any of static drying or fluidized drying may be carried out. In drying under heat, the temperature is not specifically defined, but may be generally 50°C or more and 250°C or less. The device to be used for drying under heat includes, for example, a shelf drier, a slurry drier, and a spray drier.

In wet mixing, some starting material mixtures such as aluminum source material may dissolve in a solvent depending on the type of the starting material; however, the starting material mixture such as the aluminum source material dissolved in the solvent may again precipitate to be a solid content through solvent evaporation.

Thus obtained powdery starting material mixture may be shaped to give a shaped body of the starting material mixture. Firing the shaped body may inhibit the shrinkage of the shaped body in firing, and may prevent breaking of the shaped body. The shaping machine to be used for shaping includes a uniaxial press, an extruder (a uniaxial extruder), a tabletter, and a granulator.

In shaping the starting material mixture to obtain a shaped body of the starting material, a pore-forming agent, a binder, a lubricant, a plasticizer, a dispersant, a solvent and the like may be added to the starting material mixture.

The pore-forming agent includes, for example, carbon materials such as graphite; resins such as polyethylene, polypropylene, and polymethyl methacrylate; vegetable materials such as starch, nutshell, walnut shell, and corn; ice, and dry ice.

The binder includes, for example, celluloses such as methyl cellulose, carboxymethyl cellulose, and sodium carboxymethyl cellulose; alcohols such as polyvinyl alcohol; salts such as lignin sulfonate salt; waxes such as paraffin wax, or microcrystalline wax; thermoplastic resins such as EVA, polyethylene, polystyrene, liquid-crystalline polymer, and engineering plastics. Some substances may serve both as a pore-forming agent and a binder. These substances serving both as a pore-forming agent and a binder may be capable of bonding the particles in shaping to thereby keep the shaped body, and capable of being fired away in the subsequent firing step to form pores, particularly include polyethylene.

The lubricant includes, for example, alcoholic lubricants such as glycerin; higher fatty acids such as caprylic acid, lauric acid, palmitic acid, alginic acid, oleic acid, and stearic acid; metal stearates such as aluminum stearate. The lubricant generally functions also as a plasticizer.

As the solvent, generally used is ion-exchanged water, as well as alcohols such as methanol, and ethanol.

When the starting material mixture or the shaped body thereof is fired to thereby give a fired body of aluminum titanate-based ceramic such as aluminum titanate or aluminum magnesium titanate, the firing temperature may be generally 1300°C or more, preferably 1400°C or more. On the other hand, in order that the fired body of aluminum titanate-based ceramic is made to be readily processed, the firing temperature is generally 1650°C or less, preferably 1600°C or less, more preferably 1550°C or less. Not specifically defined, the heating rate up to the firing temperature may be generally 1°C/hr or more and 500°C/hr or less, and preferably 2°C/hr or more and 500°C/hr or less. A hold-step at constant temperature may be provided during the firing.

The firing may be carried out generally in air; however, depending on the constitutive ingredients of the starting material mixture and the blend ratio thereof, the firing may be carried out in an inert gas such as nitrogen gas, and argon gas; or in a reducing gas such as carbon monoxide gas, and hydrogen gas. The water vapor partial pressure in the atmosphere may be reduced in firing.

In general, the firing is carried out using an ordinary firing furnace such as a tubular electric furnace, a boxy electric furnace, a tunnel furnace, a far-IR furnace, a microwave heating furnace, a shaft furnace, a reverberating furnace, a rotary furnace, and a roller hearth furnace. The firing may be carried out by batch process or by continuous process. The firing may be carried out in a static mode or a fluidized mode.

The time to be taken for the firing may be not less than a time enough for transition of the above-mentioned mixture into an aluminum titanate-based ceramic, and may be generally 10 minutes or more and 72 hours or less, depending on the amount of the mixture, the type of the firing furnace, the firing temperature, the firing atmosphere and others.

In that manner, the aluminum titanate-based ceramic can be obtained as a fired body.

The aluminum titanate-based ceramic obtained in the production process of the invention includes a crystal pattern of aluminum titanate in X-ray diffraction spectrum, and in addition, the ceramic may further contain any other crystal pattern of silica, alumina, and titania. When the aluminum titanate-based ceramic is aluminum magnesium titanate $(Al_{2(1-x)}Mg_xTi_{(1+x)}O_5)$, the value x may be controlled by the titania-equivalent amount of the titanium source material, the alumina-equivalent amount of the aluminum source material, and the magnesia-equivalent amount of the magnesium source material. The value x is 0.01 or more, preferably 0.01 or more and 0.7 or less, more preferably 0.02 or more and 0.5 or less.

EXAMPLES

The invention is described in detail with reference to the following Examples; however, the invention should not be limited to the embodiments of the following Examples.

The aluminum titanate conversion ratio (hereinafter referred to as "AT conversion ratio") of the aluminum titanate-based ceramic obtained in Example and Comparative Example was calculated from the integrated intensity ($I_T$) of the peak [corresponding to the titania-rutile phase (110) face] appearing at the position of 2θ=27.4°, and the integrated intensity ($I_{AT}$) of the peak [corresponding to the aluminum titanate phase (230) face and the aluminum magnesium titanate phase (230) face] appearing at the position of 2θ=33.7° in a powder X-ray diffraction spectrum, according to the formula (1) .

$$\text{AT Conversion Ratio (\%)} = 100 \times I_{AT}/ (I_{AT} + I_T) \quad \cdots \quad (1)$$

The particle shape of the aluminum titanate-based ceramic obtained in Example and Comparative Example was observed with a scanning electromicroscope [SEM].

The coefficient of thermal expansion of the fired body of the aluminum titanate-based ceramic [$K^{-1}$] was determined by cutting a sample out of the fired body obtained in Example and Comparative Example, heating the sample from room temperature up to 600°C at a rate of 200°C/h. Afterward, heating the sample up to 1000°C at a rate of 600°C/h using a thermal mechanical analyzer [TMA (SII Technology's TMA6300)], and calculating the coefficient of thermal expansion [$K^{-1}$] of the sample during the period.

The shrinkage ratio of the aluminum titanate-based ceramic was determined according to the following formula (2) :

$$\text{Shrinkage ratio(\%)} = 100 \times ((H - H_0) + (A - A_0))/2 \quad \cdots \quad (2)$$

wherein $A_0$ means the diameter of the shaped body of the starting material before firing, $H_0$ means the thickness thereof, A means the diameter of the fired body after firing, and H means the thickness thereof.

The BET specific surface area of the aluminum source material used as the starting material in Example and Comparative Example indicates the specific surface area thereof determined according to a BET one-point measurement method. The secondary particle size is calculated as the volume-based cumulative 50%-equivalent particle size (D50), using a laser diffraction particle size analyzer [Nikkiso's Microtrac HRA(X-100)].

[Example 1]

Into an alumina-made grinding container having a inner capacity of 50L, 4810 g of titania powder [Dupont's "R-900"] having a BET specific surface area of 15.2 $m^2$/g, 4093g of α-alumina powder having a BET specific surface area of 0.6$m^2$/g, a secondary particle size of 43 μm, 405 g of magnesia powder [Ube Material's "UC-95S"], and 693 g of glass frit [Takara Standard's "CF-0043M2"] having a deformation point of 852°C (measured by the maker) were added along with 80 kg of alumina balls having a diameter of 15 mm. The total volume of the starting material mixture was 10L. Next, the starting material mixture was ground and mixed by vibrating the grinding container using a vibration mill for 30 minutes under the condition of a vibration amplitude of 10 mm, a vibration frequency of 1200 times/min, and a power of 5.5kW. With a uniaxial shaping machine under a shaping pressure of 0. 3 t/cm², 3 g of the starting material mixture was shaped to give a shaped body of the starting material having a diameter of about 20 mm ($A_0$), and a thickness of about 5 mm ($H_0$). The shaped body of the starting material was heated up to 1450 °C at a heating rate of 300°C/h in a boxy electric furnace, and kept at that temperature for 4 hours whereby the shaped body was fired. Next, this was left cooled to room temperature to give a shaped body of ceramics in Example 1. The starting material mixture was fired under the same condition, the diffraction spectrum of the obtained fired body was analyzed through powder X-ray diffraction spectrometry, and the AT conversion ratio was 100 %. The shrinkage ratio and the coefficient of thermal expansion of the shaped body of the ceramic in Example 1 was respectively 8.6%, and -0.72 × 10$^{-6}$ [K$^{-1}$], thus smaller coefficient of thermal expansion and smaller shrinkage ratio were accomplished. When the obtained aluminum magnesium titanate was represented by $(Al_2(_{1-x})Mg_xTi(_{1+x})O_5)$, the value x was 0.20.

[Comparative Example 1]

The shaped body of ceramic in Comparative Example 1 was obtained in the same manner as in Example 1, except that, α-alumina powder [Sumitomo Chemical's "AES-12"] having a BET specific surface area of 6.2 m$^2$/g was used in place of α-alumina powder used in Example 1. The diffraction spectrum was analyzed through powder X-ray diffraction spectrometry, and the AT conversion ratio was 100 %. The shrinkage ratio and the coefficient of thermal expansion of the shaped body of the ceramic in Comparative Example 1 was respectively 11.4 %, and -0.14 × 10$^{-6}$ [K$^{-1}$], that is, the shrinkage ratio became bigger. And the value x was 0.20.

INDUSTRIAL APPLICABILITY

The aluminum titanate-based ceramic such as aluminum titanate or aluminum magnesium titanate obtained in the production process of the invention is usable in various industrial applications. The appication includes, for example, tools for firing furnaces such as crucibles, setters, saggers, and refractories; filters and catalyst carriers for use for exhaust gas purification in internal combustion engines such as diesel engines, gasoline engines; ceramic filters, which are used for filters for filtration for foods such as beer, filters for selective permeation of gaseous components to be generated during petroleum purification, such as carbon monoxide, carbon dioxide, nitrogen, and oxygen; electronic parts such as substrates, and capacitors.

**Claims**

1. A process for producing an aluminum titanate-based ceramic, comprising firing a starting material mixture containing a titanium source material and an aluminum source material, wherein the BET specific surface area of the aluminum source material is 0.1 m$^2$/g or more and 5 m$^2$/g or less.

2. The process according to claim 1, wherein the BET specific surface area of the aluminum source material is 0.3 m$^2$/g or more and 3 m$^2$/g or less.

3. The process according to claim 1 or 2, comprising shaping the starting material to give a shaped body of the starting material and firing the resulting shaped body of the starting material.

4. The process according to any one of claims 1 to 3, wherein the titania-equivalent amount of the titanium source material to be used is 30 parts by mass or more and 70 parts by mass or less relative to 100 parts by mass of the total of the titania-equivalent amount of the titanium source material to be used and the alumina-equivalent amount of the aluminum source material to be used.

5. The process according to any one of claims 1 to 4, wherein the BET specific surface area of the titanium source material is 0.1 m$^2$/g or more and 100 m$^2$/g or less.

6. The process according to any one of claims 1 to 5, wherein the starting material mixture further contains a magnesium source material.

7. The process according to claim 6, wherein the magnesia-equivalent amount of the magnesium source material to be used is 0.1 parts by mass or more and 10 parts by mass or less relative to 100 parts by mass of the total of the titania-equivalent amount of the titanium source material to be used and the alumina-equivalent amount of the aluminum source material to be used.

8. The process according to any one of claims 1 to 7, wherein the starting material mixture further contains a silicon source material.

9. The process according to claim 8, wherein the silicon source material is a feldspar or a glass frit.

10. The process according to claim 9, wherein the deformation point of the glass frit is 700°C or more.

11. The process according to any one of claims 1 to 10, wherein the starting material mixture is further mixed with a vibration mill.

12. The process according to claim 11, wherein alumina balls or zirconia balls having a diameter of 1 mm or more and 100 mm or less are used as a grinding media in the vibration mill mixing.

13. The process according to claim 11 or 12, wherein the vibration mill is vibrated with the amplitude of 2 mm or more and 20 mm or less.

<table>
<tr><td colspan="2">**INTERNATIONAL SEARCH REPORT**</td><td>International application No.<br>PCT/JP2009/065321</td></tr>
</table>

A. CLASSIFICATION OF SUBJECT MATTER
*C04B35/46*(2006.01)i

According to International Patent Classification (IPC) or to both national classification and IPC

B. FIELDS SEARCHED

Minimum documentation searched (classification system followed by classification symbols)
C04B35/46

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)
REGISTRY(STN), CAplus(STN), JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-87797 A  (Ohcera Co., Ltd.),<br>07 April 2005 (07.04.2005),<br>claims 6, 7; paragraphs [0040], [0041], [0044], [0045] | 1-10<br>9-13 |
| X<br>Y | JP 2005-314170 A  (Ohcera Co., Ltd.),<br>10 November 2005 (10.11.2005),<br>paragraphs [0034] to [0036]<br>(Family: none) | 1-10<br>9-13 |
| X<br>Y | JP 2005-314185 A  (Ohcera Co., Ltd.),<br>10 November 2005 (10.11.2005),<br>paragraphs [0038] to [0042]<br>(Family: none) | 1-10<br>9-13 |

[X] Further documents are listed in the continuation of Box C.    [X] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
24 November, 2009 (24.11.09)

Date of mailing of the international search report
08 December, 2009 (08.12.09)

Name and mailing address of the ISA/
Japanese Patent Office

Authorized officer

Facsimile No.

Telephone No.

Form PCT/ISA/210 (second sheet) (April 2007)

**INTERNATIONAL SEARCH REPORT**

International application No.

PCT/JP2009/065321

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2005-46667 A  (Ohcera Co., Ltd.),<br>24 February 2005 (24.02.2005),<br>claims 5, 6 | 1-3,5,6,8-10<br>9-13 |
| Y | JP 2008-514542 A  (Corning Inc.),<br>08 May 2008 (08.05.2008),<br>claim 1; paragraphs [0007], [0008] | 9,10 |
| Y | JP 2002-344033 A  (Kyocera Corp.),<br>29 November 2002 (29.11.2002),<br>paragraph [0028]<br>(Family: none) | 11-13 |
| Y | JP 2005-89293 A  (Sakai Chemical Industry Co., Ltd.),<br>07 April 2005 (07.04.2005),<br>paragraph [0004] | 11-13 |
| A | JP 2006-124237 A  (Sumitomo Chemical Co., Ltd.),<br>18 May 2006 (18.05.2006),<br>claims 1 to 3<br>(Family: none) | 1-13 |
| A | JP 2008-44824 A  (Sumitomo Chemical Co., Ltd.),<br>28 February 2008 (28.02.2008),<br>claims 1 to 4<br>(Family: none) | 1-13 |

Form PCT/ISA/210 (continuation of second sheet) (April 2007)

<table>
<tr><td colspan="2"><strong>INTERNATIONAL SEARCH REPORT</strong><br>Information on patent family members</td><td>International application No.<br>PCT/JP2009/065321</td></tr>
</table>

```
  JP 2005-87797 A       2005.04.07      US 2006/0239880 A1
                                        EP 1652830 A1
                                        WO 2005/009918 A1
                                        CA 2533387 A
                                        KR 2006-0095877 A

  JP 2005-46667 A       2005.02.24      US 2006/0239880 A1
                                        EP 1652830 A1
                                        WO 2005/009918 A1
                                        CA 2533387 A
                                        KR 2006-0095877 A
                                        CN 1812945 A
                                        CN 101091925 A

 JP 2008-514542 A       2008.05.08      US 2006/0064957 A1
                                        EP 1805112 A
                                        WO 2006/039255 A2
                                        CN 101027256 A

 JP 2005-89293 A        2005.04.07      JP 2005-89294 A
                                        US 2008/0044344 A1
                                        EP 1798200 A1
                                        WO 2006/016428 A1
                                        KR 2007-0058496 A
                                        CN 101014538 A
```

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2005105704 A